# EUROPEAN PATENT SPECIFICATION

(11) **EP 1 622 716 B1**
(45) Date of publication and mention of the grant of the patent: **03.10.2018**
(21) Application number: 04732355.5
(22) Date of filing: 12.05.2004
(51) Int. Cl.: B01J 20/06, B01J 20/32, C02F 1/28

(54) **METHOD OF PREPARING A WATER TREATMENT PRODUCT**
VERFAHREN ZUR HERSTELLUNG EINES WASSERBEHANDLUNGSPRODUKTES
PROCEDE DE PREPARATION D'UN PRODUIT DE TRAITEMENT DE L'EAU

(30) Priority: 15.05.2003 GB 0311154
(43) Date of publication of application: 08.02.2006
(73) Proprietor: ALCAN INTERNATIONAL LIMITED, Montreal Quebec H3A 3G2 (CA)
(72) Inventor: AZIZIAN, Farid, Bicester, Oxfordshire OX6 7FQ (GB); EVANS, Kenneth, Buckinghamshire SL9 0DX (GB); PRICHETT, Derek, Chicoutimi, Quebec G7H 7B7 (CA); ZOUIKIN, Sergei, RR 1 Sydenham, Ontario K0H 2T0 (CA); MOGAN, Jon, Kemptville, Ontario (CA); RISTO, Marie Noella Gail, Glenburnie, Ontario K0H 1S0 (CA); FLANNAGAN, John Robert, Kingston, Ontario K7K 7E2 (CA); EL-TANNIR, Walid, Ottawa, Ontario K1V 8X8 (CA)
(74) Representative: Wilkinson, Stephen John
(86) International application number: PCT/GB2004/002041
(87) International publication number: WO 2004/101142

(56) References cited:
- WO-A-94/06717
- WO-A-99/50182
- CA-A- 1 067 627
- US-B1- 6 200 482
- US-B1- 6 599 429
- EDWARDS M; BENJAMIN M M: "ADSORPTIVE FILTRATION USING COATED SAND: A NEW APPROACH FOR TREATMENT OF METAL-BEARING WASTES" JOURNAL OF THE WATER POLLUTION CONTROL FEDERATION, vol. 61, no. 9/10, 1 September 1989 (1989-09-01), pages 1523-1533, XP000173147 WASHINGTON, US cited in the application
- DATABASE WPI Section Ch, Week 198410 Derwent Publications Ltd., London, GB; Class D15, AN 1984-059133 XP002294812 & JP 59 016590 A (NIPPON DENKI KANKYO ENG KK) 27 January 1984 (1984-01-27)

## Description

This invention relates to a method of preparing a water treatment product, particularly one that is capable of adsorbing arsenic, fluoride, selenium or other contaminants including other heavy metals, or organic materials.

As discharge limits for metals tighten, adsorption processes for high level treatment of metal bearing wastes becomes increasingly attractive. Adsorption is capable of removing many metals over a wider pH range and to much lower levels than precipitation. Additionally, adsorption can often remove complexed metals which would not be checked by conventional treatment processes.

An adsorbent commonly present in metal treatment processes is an amorphous iron oxide called ferrihydrite. A disadvantage of such treatment is that ferrihydrite forms a sludge product from which it is difficult to recover purified water. In order to address this problem, a water treatment product has been described which consists of washed sand coated with ferrihydrite (M Edwards and M M Benjamin, Jnl. Water Poll Control Fed, Vol 61, Part 9, 1989, pages 1523-1533). That product has also been tested for removal of arsenic from drinking water (F G A Vagliasindi et al, Proceedings Water Quality Technology Conference, Part 2, New Orleans, 12-16 November 1995, pages 1829-1853).

In Europe and USA the permitted quantities of arsenic in drinking water have been, or will shortly be, reduced from 50 µg/l to 10 µg/l. As a water treatment product for removing arsenic, activated alumina has been proposed (Canadian patent 2,090,989). The particles of activated alumina are robust and readily separable from treated water. Although activated alumina is by itself an active adsorbent of arsenic and other heavy metals, there is a need for an even better material. This need has been addressed in WO 96/37438, which proposes water treatment compositions comprising lanthanum oxides and alumina. But lanthanum oxides would be prohibitively expensive for the treatment of very large volumes of water.

Other water treatment products are disclosed in HU-A-187422, CA-A-1067627 and "Surface Properties of Fe(OH)3 Absorbent Prepared on Aluminium Oxide", Magya Kemiai Folyoirat, 101.1995.5, pp 189-195.

Additionally, WO-A-99/50182 discloses a water treatment product and method in which a water treatment product is coated with an insoluble ferric iron coating.

Previously, in the commercial production of water treatment products, it has been found necessary to include a drying step after coating alumina or the like with a wet slurry of a ferric salt. This process has led to higher cost and the possibility of lowering the efficiency of the adsorbent if a high temperature is used, production of significant quantities of waste ferric salt solution, difficulties with drying on commercial equipment and the fact that the dried product contains lumps and agglomerates.

According to the present invention, there is provided a method of preparing a water treatment product, which method comprises the steps of:
(i) impregnating a high surface area material with an iron salt solution by spray impregnation;
(ii) optionally oxidising the iron salt; and
(iii) treating the impregnated material by spraying with a base to provide a hydrated ferric oxide coating thereon,
wherein the resulting product is recovered without forced drying.

The high surface area material is preferably selected from alumina, silica, and/or phosphate containing materials such as natural or synthetic zeolites (e.g. chabazite, Faujasite or the like), zeotype materials such as ALPO's (synthetic aluminophosphates) or SAPO's (silica containing aluminophosphates), felspathoids (e.g. sodalite), melanophlogite, imogolite, chalcogenides, zirconium phosphate, zeolite, clay or hydrotalcite. Alumina is particularly preferred. Other examples of high surface area materials are disclosed in US 5322641, which is incorporated herein by reference. For example, this document discloses the use of a porous inorganic solid wherein at least some of its pores are micropores comprising holes, cages or channels which are essentially of molecular dimensions and which are formed by the structure of the solid.

In one embodiment, the high surface area material is activated, a particularly preferred example being activated alumina. It should be noted that not all high surface area materials need to be activated; zeolites are naturally high surface area materials and do not need to be activated.

The method of the invention has been found to produce a product which is not wet or clumpy as it is not completely saturated with water. Furthermore, no forced drying step is required because the product is still in a free-flowing state at the end of the production process, as such lumps and/or agglomerates tend not to be produced. In particular, the process allows the product to be removed from the equipment in which it is produced immediately after completion of the process without lumps or agglomerates being present. Furthermore, the method has been found to provide a simple, economical process for the production of the water treatment product.

In the embodiment in which the high surface material is alumina, as previously mentioned, preferably there is used an activated alumina product, a product formed by heating alumina trihydrate at 300-1100°C. Activated alumina has the advantage of having a large specific surface area. Thus, for example, the commercial product AA400G has a specific surface area of 260 - 380 m²/g. In an alternative embodiment, the material may be of bauxite. The non-volatile content of bauxite preferably comprises from 40 - 95 wt% of Al₂O₃ together with from 3 - 25 wt% of iron oxide. Activated bauxite is a preferred material which may be formed by heating the mineral at a temperature in the range 300 - 800°C, and may typically have a specific surface area of from 100 - 200 m²/g. Because the iron content of bauxite is present in, rather than on, the particle surface, it is generally not counted as part of the coating of this invention.

Any suitable grade of activated alumina can be used, for example AA400G.

Any mesh size of the high surface area material (for example activated alumina) may be used; preferred are smaller particles that increase the capacity of the adsorbent for arsenic removal. Examples are 0.6 mm-1.18 mm (14 x 28 mesh), more preferably 0.3 mm-0.6 mm (28 x 48 mesh).

According to the invention, the high surface area material is impregnated with the iron salt solution using spray impregnation. It is preferred that the material and iron salt solution are agitated during the impregnating step. This agitation can be periodic or continuous. The impregnation step can occur in any suitable apparatus, one example being a rotating drum or the like, such as a pelletising drum or pan. The rotating drum preferably comprises internal vanes.

The iron salt is in the form of a solution and may be either a ferrous or ferric salt. Any suitable iron salt solution can be used, examples being the chloride and sulphate solutions. The optional oxidising step (ii) is used when the material is impregnated with a ferrous salt and is used to oxidise it to the ferric salt. The oxidation may simply be oxidation in air.

The concentration of the iron solution is important in order to obtain the desired level of coating with the desired level of iron. In general, higher concentration strengths are preferred in order to obtain higher levels of iron coatings, for example 1 - 9% Fe, preferably 2 - 7% Fe, most preferably 3 - 5% Fe.

After the impregnating step, the impregnated material is treated by spraying with a base and it is preferred that the base is added until a pH of 5 - 9 is reached, preferably 6 - 8, more preferably 6.5 - 7.5. This treatment provides a hydrated ferric oxide coating by conversion of the iron salt to the hydrated ferric oxide coated over the material. It should be noted that, in one embodiment, the product resulting from the process of the invention comprises exposed material, that is material (for example alumina) which is not entirely covered by the hydrated ferric oxide coating.

The base itself can be any suitable base, examples being sodium hydroxide or sodium carbonate solutions. Typical strengths are about 50% solutions.

Water treatment products formed by the above method have use in the treatment of water. Such a water treatment method comprises contacting water to be treated with the water treatment product, and
thereafter recovering treated water containing a reduced concentration of organic or inorganic materials.

It is preferred to provide a reduced concentration of one or more of at least one heavy metal or As or Se or F or Cr or U, Th or other radioactive materials. Batch treatment typically involves agitating the water to be treated with an aliquot of the water treatment product, the amount of which is chosen in order to achieve a desired degree of water purification in a desired time, typically more than 1 hour, generally 24-28 hours. Continuous methods are also possible as well known in the art. For example, the water to be treated is passed through a column, bed, cartridge or the like which contains the water treatment product with Empty Bed Contact Time (EBCT) of typically 1-12 minutes depending on the size of the column.

It is preferred that the treated water has a reduced As concentration of not more than 20µg/l, even more preferably not more than 10µg/l, even more preferably not more than 3µg/l.

Optimum conditions for removal of organic materials and of inorganic materials are generally different. Depending on the nature of the contaminant to be removed, it may be advantageous to adjust the pH of the water in order to improve the performance of the water treatment product. Thus, for example, arsenic is best removed at a pH of 5 to 7 preferably 5.5, while fluoride is best removed at a pH of 6 to 8, preferably 7.

Particulate materials having a high specific surface area show a high capacity for adsorbing contaminants and removing them from water. The high surface area materials used in this invention preferably have a specific surface area of at least 10m²/g, more preferably at least 50m²/g, and even more preferably at least 150m²/g. An upper limit may be, for example, 800 m²/g.

The water treatment product produced by the method of this invention has a combination of useful properties including excellent capacity and avidity for rapidly adsorbing inorganic contaminants from water being treated, it is a robust material which is easily separable from treated water and can be treated to recover inorganic contaminants and so permit reuse without losing its structure.

The invention will now be illustrated with reference to the following example.

The standard for mesh sizes used is Tyler -28 mesh by +48 mesh.

### Example 1

50 g of AA-400G (0.3 mm-0.6 mm) (28 x 48 mesh) activated alumina was transferred into a small rotating pan and the continuously agitated bed of granules was slowly sprayed with 18 ml ferric chloride solution (415 g/l FeCl₃.6H₂O). The granules were then sprayed with a 4M sodium hydroxide solution until the solution pH of the treated granules was ≥7. Approximately 35 ml of sodium hydroxide solution was required.

The solution pH of the ferric chloride treated granules was determined by mixing 1.0 g of the granules in 100 ml of water for 10 minutes. The pH of the ferric chloride treated granules was measured as 2.8 before NaOH addition.

### Example 2

100 g of AA-400G (0.3 mm-0.6 mm) (28 x 48 mesh) activated alumina was transferred into a small rotating pan and the continuously agitated bed of granules was slowly sprayed with 35 ml ferrous sulfate solution (427 g/l FeSO₄.7H₂O). 10.0 g of the treated granules were removed and this sample was sprayed with 3.0 ml of a 1M sodium hydroxide solution until the solution pH of the treated granules was ≥7 (measured pH = 7.8).

### Example 3

25 g of AA-400G (0.3 mm-0.6 mm) (28 x 48 mesh) activated alumina was transferred into a small rotating pan and the continuously agitated bed of granules was slowly sprayed with 9.3 ml of ferric sulfate solution (6% Fe in dilute H₂SO₄ solution). The granules were sprayed with 6 ml of a 4M sodium hydroxide solution until the solution pH of the treated granules was ≥7 (measured pH = 7.0).

The percent moisture of each of the adsorbents prepared in Examples 1 to 3 was determined by measuring the Loss of Mass from room temperature to 300°C. The results are shown in Table 1.

**Table 1: Percent Moisture in Prepared Adsorbent (Loss of Mass to 300°C)**

| Adsorbent | Loss of Mass - wt % |
|---|---|
| FeSO₄/Activated Alumina | 25 |
| FeCl₃/ Activated Alumina | 24 |
| Fe₂(SO₄)₃/Activated Alumina | 24 |
| AA-400G | 6 |
| Granular ferric hydroxide (GFH) | 49 |

Each adsorbent was washed with distilled water and tested for equilibrium arsenic (V) adsorption capacity using NSF Challenge Water ["Metals pentavalent arsenic test water for testing" Section 6.11.4.3, Draft Revision to NSF/ANSI 53-2001 issue 17, Revision 1.2 (March 2002)] doped with 0.3 mg/l As(V) solution and adjusted to pH 8.5, 7.5 and 6.5 with HCl.

For these 'jar tests' 0.10 g of each adsorbent was pre-weighed into a 25 ml glass vial and adsorbent was washed with 20 ml of RO/DI water (reverse osmosis/deionized water). The washing was discarded. The washed adsorbent was quantitatively transferred to nalgene bottles containing 1 l of prepared NSF challenge water. The bottles were tightly closed and mixed for at least 72 h at room temperature on a laboratory shaker set at ∼150 rpm. The equilibrium arsenic concentration of each solution was measured by continuous hydride generation/inductively coupled plasma spectroscopy [Varian VGA-76P Vapor Generation Accessory with Varian Liberty 220 spectrometry system].

The equilibrium arsenic (V) adsorption capacity of the AA-400G starting material was also measured.

**Table 2: Equilibrium Arsenic (V) Adsorption Capacity of Adsorbents corrected for % moisture in mg/g (NSF Challenge Water: As (V) 0.3 mg/l, SO₄ 50 mg/l, NO₃ 2.0 mg/l, F 1 mg/l, SiO₂ 20 mg/l, PO₄ 0.04 mg/l, Total alkalinity 160 mg/l)**

| | FeSO₄/activafied alumina | FeCl₃/Activated Alumina | Fe₂(SO₄)₃/activated alumina | AA-400G |
|---|---|---|---|---|
| pH 8.5 | 1.4 | 1.2 | 1.3 | 0.8 |
| pH 7.5 | 2.2 | 2.2 | 2.0 | 0.6 |
| pH 6.5 | 3.1 | 3.2 | 3.1 | 2.1 |

Table 2 shows an improved arsenic (V) adsorption capacity for adsorbents according to the invention over AA400G.

The results show that it may be preferred to adjust the pH of the water to be treated to achieve optimal results, in terms of unwanted materials from water. A further advantage is that the water treatment products prepared according to the invention do not need to be dried and do not form lumps or agglomerates.

## Claims

1. A method of preparing a water treatment product, which method comprises the steps of:
(i) impregnating a high surface area material with an iron salt solution by spray impregnation;
(ii) optionally oxidising the iron salt; and
(iii) treating the impregnated material by spraying with a base to provide a hydrated ferric oxide coating thereon,
wherein the resulting product is recovered without forced drying.

2. A method according to claim 1, wherein the high surface area material has a specific surface area of at least 10 m²/g.

3. A method according to either claim 1 or claim 2, wherein the high surface area material is selected from one or more of alumina-, silica-, and/or phosphate- containing materials.

4. A method according to claim 3, wherein the high surface area material is activated alumina.

5. A method according to any preceding claim, wherein the iron salt is a ferric salt.

6. A method according to any one of claims 1 to 5, wherein the iron salt is a ferrous salt which is oxidised to a ferric salt by step (ii).

7. A method according to any preceding claim, further comprising agitating during the impregnating step.

8. A method according to any preceding claim, wherein the base is added until a pH of 5 to 9 is reached.

9. A method according to any preceding claim, wherein the resulting product comprises exposed high surface area material which is not entirely covered by the hydrated ferric oxide coating.

## Patentansprüche

1. Verfahren zur Herstellung eines Produkts zur Wasserbehandlung, wobei das Verfahren folgende Schritte umfasst:
(i) Imprägnierung eines Materials mit großer Oberfläche mit einer Eisensalzlösung durch Sprühimprägnierung;
(ii) gegebenenfalls Oxidierung des Eisensalzes; und
(iii) Behandlung des imprägnierten Materials durch Besprühen mit einer Base, um eine hydratisierte Eisenoxidbeschichtung darauf zu schaffen,
wobei das resultierende Produkt ohne forcierte Trocknung gewonnen wird.

2. Verfahren nach Anspruch 1, wobei das Material mit großer Oberfläche eine spezifische Oberfläche von mindestens 10 m²/g hat.

3. Verfahren nach einem der Ansprüche 1 oder 2, wobei das Material mit großer Oberfläche aus einem oder mehreren Aluminium, Silizium und/oder Phosphat enthaltenden Materialien ausgewählt wird.

4. Verfahren nach Anspruch 3, wobei das Material mit großer Oberfläche aktiviertes Aluminiumoxid ist.

5. Verfahren nach einem der vorhergehenden Ansprüche, wobei das Eisensalz ein Eisen(III)-Salz ist.

6. Verfahren nach einem der Ansprüche 1 bis 5, wobei das Eisensalz ein eisenhaltiges Salz ist, das durch Schritt (ii) zu einem Eisen(III)-Salz oxidiert wird.

7. Verfahren nach einem der vorhergehenden Ansprüche, ferner umfassend Rühren während des Imprägnierungsschrittes.

8. Verfahren nach einem der vorhergehenden Ansprüche, wobei die Base hinzugefügt wird, bis ein pH-Wert von 5 bis 9 erreicht wird.

9. Verfahren nach einem der vorhergehenden Ansprüche, wobei das resultierende Produkt ein Material mit großer Oberfläche umfasst, das nicht vollständig von der hydratisierten Eisenoxidbeschichtung bedeckt ist.

## Revendications

1. Procédé de préparation d'un produit de traitement de l'eau, le procédé comprenant les étapes suivantes :
(i) imprégnation d'un matériau à grande surface d'une solution de sel de fer par imprégnation par pulvérisation ;
(ii) oxydation facultative du sel de fer ; et
(iii) traitement du matériau imprégné par pulvérisation avec une base en vue de produire sur celui-ci un revêtement d'oxyde ferrique hydraté,
le produit résultant étant récupéré sans séchage forcé.

2. Procédé selon la revendication 1, le matériau à grande surface ayant une surface spécifique d'au moins 10 m²/g.

3. Procédé selon la revendication 1 ou la revendication 2, le matériau à grande surface étant choisi parmi un ou plusieurs matériaux contenant de l'alumine, de la silice et/ou du phosphate.

4. Procédé selon la revendication 3, le matériau à grande surface étant de l'alumine activé.

5. Procédé selon l'une quelconque des revendications précédentes, le sel de fer étant un sel ferrique.

6. Procédé selon l'une quelconque des revendications 1 à 5, le sel de fer étant un sel ferreux qui est oxydé en un sel ferrique par l'étape (ii) .

7. Procédé selon l'une quelconque des revendications précédentes, comprenant en outre l'agitation pendant l'étape d'imprégnation.

8. Procédé selon l'une quelconque des revendications précédentes, la base étant ajoutée jusqu'à atteindre un pH de 5 à 9.

9. Procédé selon l'une quelconque des revendications précédentes, le produit résultant comprend du matériau à grande surface exposé qui n'est pas entièrement recouvert par le revêtement d'oxyde ferrique hydraté.
